(19) Europäisches Patentamt / European Patent Office / Office européen des brevets

(11) **EP 3 899 185 B1**

(12) **EUROPEAN PATENT SPECIFICATION**

(45) Date of publication and mention of the grant of the patent:
**12.11.2025 Bulletin 2025/46**

(21) Application number: **19842696.7**

(22) Date of filing: **20.12.2019**

(51) International Patent Classification (IPC):
***E06B 3/67*** *(2006.01)*

(52) Cooperative Patent Classification (CPC):
**E06B 3/6707**

(86) International application number:
**PCT/US2019/068018**

(87) International publication number:
**WO 2020/132547 (25.06.2020 Gazette 2020/26)**

(54) **TRIPLE PANE FENESTRATION ASSEMBLY**

DREIFACH VERGLASTE FENSTERANORDNUNG

ENSEMBLE DE FENÊTRAGE À TRIPLE VITRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2018 US 201862783787 P**

(43) Date of publication of application:
**27.10.2021 Bulletin 2021/43**

(60) Divisional application:
**25207476.0**

(73) Proprietor: **Corning Incorporated Corning, New York 14831 (US)**

(72) Inventors:
• **BERTIN-MOUROT, Thomas**
  **75015 Paris (FR)**
• **COUILLARD, James Gregory**
  **Ithaca, New York 14850 (US)**
• **MCDONALD, Michael Aaron**
  **Painted Post, New York 14870 (US)**
• **VANNIAMPARAMBIL, Prashanth Abraham**
  **Binghamton, New York 13905 (US)**

(74) Representative: **Epping - Hermann - Fischer Patentanwaltsgesellschaft mbH Schloßschmidstraße 5 80639 München (DE)**

(56) References cited:
EP-A1- 2 982 824    WO-A1-2014/168219
WO-A1-2015/200793    WO-A1-2019/126521
CN-A- 107 984 863    GB-A- 2 499 646
US-A- 4 019 295

• CORNING: "The future is flexible: Corning◆ Willow◆ Glass Optical Transmission Bend Stress", 1 January 2019 (2019-01-01), XP093045958, Retrieved from the Internet <URL:https://www.corning.com/media/worldwide/Innovation/documents/WillowGlass/Corning%20Willow%20Glass%20Fact%20Sheets_August2019.pdf> [retrieved on 20230510]
• PG SMARTGLASS: "General Information", 1 February 2016 (2016-02-01), pages 1 - 3, XP093221925, Retrieved from the Internet <URL:https://www.pgsmartglass.co.za/wp/wp-content/uploads/2016/10/Glossary-of-terms-10.03-LR.pdf>

## Description

CROSS-REFERENCE TO RELATED APPLICATIONS

This application claims the benefit of priority under 35 U.S.C. § 119 of U.S. Provisional Application No. 62/783,787, filed December 21, 2018.

TECHNICAL FIELD

This document pertains generally, but not by way of limitation, to fenestration assemblies and panes for fenestration assemblies.

BACKGROUND

A fenestration assembly (e.g., a door, window, or the like) is coupled with a structure (e.g., a single-family home, townhome, warehouse, office building, or the like). In some examples, the fenestration assembly includes one or more panes (e.g., a sheet of soda lime glass) and the panes allow light to enter the structure while preventing the elements (e.g., wind, rain, dust, debris, or the like) from entering the structure. Additionally, the fenestration assembly limits heat transfer from the structure to a surrounding environment.

Application WO 2015/200793 A1 discloses a tripple pane fenestration assembly according to the preamble of claim 1.

SUMMARY

Generally, the present disclosure is directed towards various embodiments of a fenestration assembly having a tailored configuration directed towards improved performance characteristics in one or both of: acoustic performance (e.g. sound dampening) and/or reduced edge seal force (e.g. where, without being bound to a particular mechanism and/or theory, edge seal force is believed to be a proxy metric attributable to fenestration assembly lifetime (e.g. performance, viability, and/or longevity)).

More specifically, the present disclosure is directed towards unique and/or tailored configurations of fenestration assemblies (e.g. triple pane with dual chambers and corresponding seal(s) to form an IGU) wherein: (1) the outer pane (first pane) is configured with a higher proportion of the overall IGU thickness (e.g. or weight) for improved acoustic performance of the fenestration assembly and/or (2) the remaining two panes (e.g. second pane and third pane) are configured such that the edge seal force of the fenestration assembly is not greater than 1.2 N/m across the IGU for improved IGU edge seal force, thus promoting improved performance and/or corresponding improved longevity of the IGU (e.g. as compared to triple pane IGUs without (1) and/or (2) above). One or more of the embodiments detailed herein are specifically designed and/or configured to maximize sound dampening and/or prevent, mitigate, and/or reduce the stress on the edge seal(s), (e.g. edge seal force).

The present inventors have recognized, among other things, that a problem to be solved can include improving the performance of a fenestration assembly (e.g., a door, window, or the like). Additionally, the present inventors have recognized, among other things, that a problem to be solved can include reducing the amount of noise that enters a structure through the fenestration assembly (e.g., noise generated by a vehicle passing the structure, noise generated by a neighboring structure, or the like). Further, the present inventors have recognized, among other things, that a problem to be solved can include improving the thermal insulating performance of fenestration assemblies. Still further, the present inventors have recognized, among other things, that a problem to be solved can include providing a triple pane fenestration assembly with similar dimensions (e.g., thickness) and/or weight to a double pane fenestration assembly. Still yet further, the present inventors have recognized, among other things, that a problem to be solved can include providing a triple pane fenestration assembly that has smaller dimensions (e.g., thickness) and/or less weight than a double pane fenestration assembly. Additionally, the present inventors have recognized, among other things, that a problem to be solved can include improving the mechanical performance (e.g., impact resilience or static load resilience) or the lifetime performance (e.g., service life, technical life, expected life, or the like) of the fenestration assembly.

The present subject matter can help provide a solution to these problems, such as by providing a triple pane fenestration assembly. Triple pane fenestration assemblies provide improved performance (e.g., thermal insulation) in comparison to double pane or single pane fenestration assemblies. In some examples, the triple pane fenestration assembly can include a first pane spaced apart from a second pane, and a third pane spaced apart from the second pane. The second pane can be located between the first pane and the third pane. The second pane can be spaced apart from the first pane and the third pane while being located between the first pane and the third pane (e.g., the second pane is centered between the first pane and the third pane). The first pane has a first pane thickness, the second pane has a second pane thickness, and the third pane has a third pane thickness.

The invention provides an isolating fenestration assembly according to claim 1.

In an example, the first pane, the second pane, and the third pane can include soda lime glass. The first pane thickness and the third pane thickness can be approximately 6 millimeters and the third thickness can be approximately 3 millimeters. A first chamber gap can be 12 millimeters and located between the first pane and the second pane. A second chamber gap can be 12 millimeters and located between the second pane and the third pane. Accordingly, the distance from exposed surfaces of the first pane and the second pane can be approximately 39 millimeters.

In another example, the second pane thickness can be less than or equal to 1 millimeter, and the first pane thickness and the third pane thickness can be approximately six millimeters. In this example, because the second pane thickness is less than or equal to 1 millimeter, the overall dimensions (e.g., thickness) or weight of the triple pane fenestration assembly can be reduced (e.g., in comparison to where the third pane is approximately 3 millimeters). For instance, the distance from exposed surfaces of the first pane and the third pane can be approximately 37 millimeters. Accordingly, reducing the thickness of the second pane correspondingly reduces the weight of the triple pane fenestration assembly.

In some examples, the second pane includes soda lime glass. However, soda lime glass is not commercially available in adequate size, quantity, and cost for a fenestration assembly (e.g., a 3 foot by 6 foot window, a 4 foot by 8 foot sliding glass door, or the like) with thicknesses less than or equal to 1 millimeter. Accordingly, a fenestration assembly including a pane with soda lime glass with a thickness less than or equal to 1 millimeter is not commercially adequate.

According to the invention, the second pane includes a low coefficient of thermal expansion ("low CTE") glazing material (e.g., alumina borosilicate or the like). The low CTE glazing material can be manufactured with a thickness of less than or equal to 1 millimeter, and in commercially adequate size, quantity, and cost for a fenestration assembly. Accordingly, the low CTE glazing provides a commercially adequate triple pane fenestration assembly in comparison to a triple pane fenestration assembly that does not include low CTE glazing (e.g., the first pane, the second pane, and the third pane each include soda lime glass).

In another example, the second pane includes a glazing material with a low surface compression. In one example, the glazing material has a surface compression within a range of 0 megaPascal (MPa) to 52 MPa. In another example, the glazing material has a surface compression within a range of 20 MPa to 30 MPa. In yet another example, the glazing material has a surface compression that is less than or equal to 24 MPa. The glazing material can be manufactured with a thickness of less than or equal to 1 millimeter, and in commercially adequate size, quantity, and cost for a fenestration assembly. Accordingly, the glazing material provides a commercially adequate triple pane fenestration assembly.

The triple pane fenestration assembly reduces the amount of noise that is transmitted into a structure through the fenestration assembly. Arranging thicker panes of the fenestration assembly (e.g., the first pane) to face away from the interior of the structure improves the acoustic performance of the triple pane fenestration assembly. In an example, the first pane is arranged to face away from an interior of a structure (e.g., the first pane is exposed to an environment that surrounds the structure). The first pane thickness can be greater than the second pane thickness and the third pane thickness. Accordingly, the mass of glass in the fenestration assembly is shifted toward the exterior of the structure (e.g., thicker panes are arranged to face the exterior of the structure). As described in greater detail herein, shifting the mass of glass in the fenestration assembly reduces the transmission of sound into the interior of the structure from the exterior of the structure.

Additionally, because the third pane thickness can be less than or equal to 1 millimeter, the mechanical performance of the triple pane fenestration assembly can be enhanced. In one example, the distance from exposed surfaces of the first pane (e.g., outer pane) and the third pane (e.g., inner pane) can be held constant. In this example, because the second pane thickness (e.g., center pane) can be reduced, the first pane thickness or the third pane thickness can be increased while maintaining the same distance from exposed surfaces of the first pane and the third pane. The increase in the first thickness or the third thickness can improve the resistance of the first pane or the third pane to impacts (e.g., hail strikes, rock strikes, or the like).

Further, because the second thickness can be reduced, the stress applied to a seal due to pressure changes in the first chamber gap or the second chamber gap can correspondingly be reduced, and the lifetime of the fenestration assembly is thereby improved. Still further, one or more of the panes of the triple pane fenestration assembly can include a plurality of pane layers (e.g., the first pane can include a laminate structure). The plurality of layers can improve the impact resistance of the pane.

This summary is intended to provide an overview of subject matter of the present patent application. It is not intended to provide an exclusive or exhaustive explanation of the invention. The detailed description is included to provide further information about the present patent application.

BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

Figure 1      shows a schematic view one example of a first fenestration assembly, in accordance with various embodiments of the present disclosure.

Figure 2      shows a cross-sectional view of an embodiment of the first fenestration assembly of Figure 1, in accordance with various embodiments of the present disclosure.

Figure 3      shows a graph of the acoustic performance of fenestration assemblies, depicted as OTIC as a function of outer (first) pane weight ($kg/m^2$), in accordance with various embodiments of the present disclosure.

Figure 4      shows another graph of the acoustic performance of fenestration assemblies, depicted as Rw (ISO 717-1) as a function of outer (first) pane weight ($kg/m^2$), in accordance with various embodiments of the present disclosure.

Figure 5      shows a graph of edge seal force (N/m) as a function of glass thickness (in mm), where edge seal force is a proxy measurement or characteristic attributing to IGU longevity, or the estimated lifetime of fenestration assemblies, in accordance with various embodiments of the present disclosure.

Figure 6      shows a graph of total glass thickness of the fenestration assembly (e.g. pane 1, 2 and 3) vs. percent of total glass thickness of the first pane of fenestration assemblies, in accordance with various embodiments of the present disclosure.

Figure 7      shows a ternary diagram of the glass percentage (by weight) of each of the three panes of fenestration assemblies, wherein the shaded region denotes a corresponding edge force seal of greater than 1.2 N/m in the fenestration assembly (e.g. triple pane IGU), in accordance with various embodiments of the present disclosure.

Figure 8      shows a cross-sectional view of an embodiment of a second fenestration assembly, in accordance with various embodiments of the present disclosure.

Figure 9      shows a cross-sectional view of a third fenestration assembly, in accordance with various embodiments of the present disclosure.
The fenestration assembly of figure 9 does not form part of the claimed invention, but helps to understand the invention.

Figure 10      shows one example of a method for manufacturing a fenestration assembly, in accordance with various embodiments of the present disclosure.

DETAILED DESCRIPTION

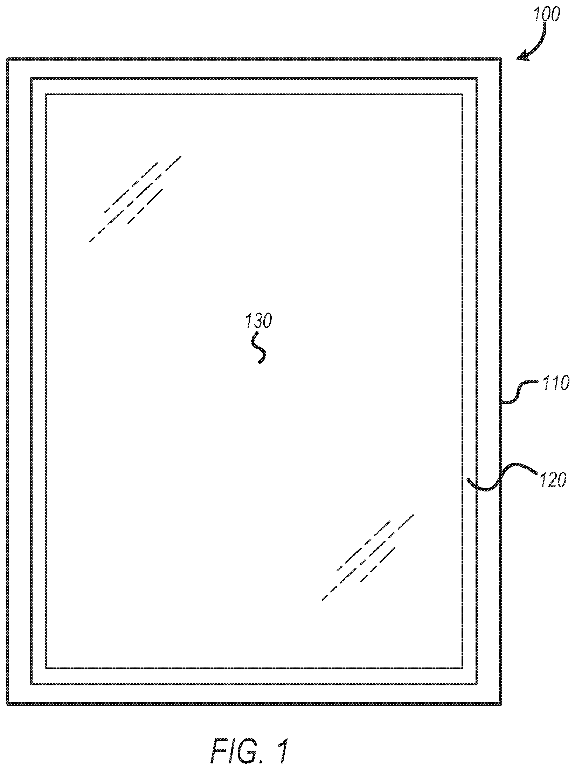

Figure 1 shows a schematic view one example of a first fenestration assembly 100 (e.g., a window, door, or the like). The fenestration assembly 100 can include a fenestration frame 110 and a sash 120. The fenestration frame 110 is configured for installation within structures, including (but not limited to) a single-family residence, multi-family residence, municipal structure, warehouse, office building, or the like). In some examples, the fenestration assembly 100 includes one or more panes 130 (e.g., a sheet of soda lime glass) and the panes 130 allow light to enter the structure while preventing the elements (e.g., wind, rain, dust, debris, or the like) from entering the structure. The panes 130 include at least one of surface features or subsurface features. In one alternative, one or more of the panes 130 can be frosted. In another alternative, one or more of the panes 130 include an uneven surface that distorts light that passes through the panes 130.

The one or more panes 130 can be coupled with (e.g., installed within) the sash 120. The sash 120 can be coupled along a perimeter of the one or more panes 130. The sash120 can be movably coupled with the frame 110. For instance, the sash 120 can move between a closed position and an open position relative to the fenestration frame 110. In an example, the sash 120 slides relative to the frame 110. In another example, the sash 120 rotates relative to the frame 110 (e.g., opens outward from the frame 110).

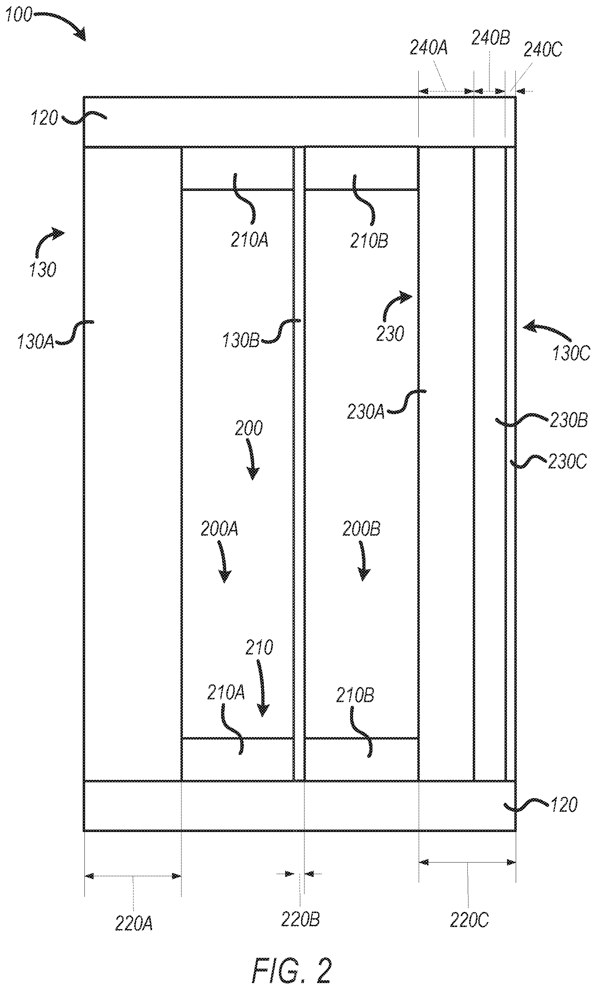

Figure 2 shows a cross-sectional view of the first fenestration assembly 100 of Figure 1. As described herein, the fenestration assembly 100 includes one or more panes 130, and the one or more panes can be coupled with the sash 120. According to the invention, the fenestration assembly 100 includes a first pane 130A, a second pane 130B, and a third pane 130C. In this example, the fenestration assembly 100 is a triple pane fenestration assembly. The triple pane fenestration assembly can provide improved performance (e.g., solar heat gain coefficient, insulation, or the like) in comparison to a double pane fenestration assembly (e.g., a fenestration assembly with two panes).

The fenestration assembly 100 includes chamber gaps 200 and spacers 210. According to the invention the first pane 130A is spaced apart from the second pane 130B by a first chamber gap 200A (e.g., within a range of approximately 1-20 millimeters, for instance 12 millimeters). The second pane 130B is spaced apart from the third pane 130C by a second chamber gap 200B (e.g., within a range of approximately 1-20 millimeters, for instance 14 millimeters). In an example, the second pane 130B is centered between the first pane 130A and the third pane 130C. A first spacer 210A can be located in the first chamber gap 200A, and a second spacer 210B can be located in the second chamber gap 200B. The spacers 210 can provide a seal for the chamber gaps 200. For instance, the spacers 210 and the panes 130 can cooperate to provide the chamber gaps 200 and the chamber gaps 200 can be sealed from the surrounding environment. Additionally, the spacers 210 can be located between the panes 130 and the fenestration frame 110. The chamber gaps 200 can include an insulating gas (e.g., an inert gas, for instance nitrogen, argon, krypton, or the like) or a vacuum (e.g., a partial vacuum).

In some examples, the first pane 130A, the second pane 130B, and/or the third pane 130C includes a plurality of layers 230. The plurality of layers can be coupled together (e.g., laminated or the like) to provide one or more of the panes 130 (e.g., the third pane 130C). As shown in Figure 2, the third pane 130C can include a glass layer 230A, an intermediate layer 230B, and a glazing layer 230C. The intermediate layer 230B is located between (e.g., sandwiched or the like) the glass layer 230A and the glazing layer 230C. The glass layer 230A can include soda lime glass material. The intermediate layer 220B includes a polymeric material (e.g., polyvinyl butyral, ethylene-vinyl acetate, thermoplastic urethane, ionomers, or the like or combinations thereof). In an example, the glazing layer 230C can include a low coefficient of thermal expansion ("low CTE") glazing material (e.g., alumina borosilicate). For instance, the coefficient of thermal expansion for the glazing layer 230C can be less than or equal to approximately $97 \times 10^{-7}$/K. In another example, the CTE for the glazing layer 230C can be less than or equal to $70 \times 10^{-7}$/K. In another example, the glazing layer 220C can have a surface compression within a range of 500 MPa to 700 MPa (e.g., 575 MPa to 625 MPa, 625 MPa, to 640 MPa, or the like). In yet another example, the glazing layer 220C can have a surface compression greater than 600 MPa (e.g., 750 MPa).

The glass layer 230A has a glass layer thickness 240A, the intermediate layer 230B has an intermediate layer thickness 240B, and the glazing layer 230C has a glazing layer thickness 240C. The glazing layer thickness 240C can be less than the glass layer thickness 240A. For instance, the glass layer thickness 240A can be within a range of approximately 2 millimeters to 6 millimeters (e.g., 3 millimeters to 4 millimeters, 4 millimeters to 5 millimeters, or the like). The glazing layer thickness 240C can be less than or equal to 1 millimeter (e.g., 0.5 millimeters, 0.7 millimeters, 0.6 millimeters to 0.8 millimeters, or the like). The intermediate layer thickness 240B can be within a range of approximately 0.3 millimeters to 3 millimeters. In an example, the glass layer thickness 240A can be 3 millimeters, and the glazing layer thickness 240C can be 0.55 millimeters. In another example, the glass layer thickness 240A can be 5 millimeters, and the glazing layer thickness 240C can be 0.7 millimeters.

As described in greater detail herein, the layers 220 can improve the mechanical performance of the panes 130. For instance, layers 230A, 230B, 230C, when incorporated into first pane 130 (not shown), can have improved impact performance and withstand a greater amount of energy in comparison to a unitary configuration (e.g., where the first pane 130A includes a single layer, or monolithic piece, of soda lime glass). In an example, the first layer thickness 240A can be increased, and the increase in first layer thickness 240A can improve the resistance of the first pane or the second pane to impacts (e.g., hail strikes, rock strikes, or the like). Additionally, the intermediate layer 230B can dissipate forces applied to the panes 130, and accordingly increase the impact resistance of the panes 130.

Referring again to Figure 2, the first pane 130A includes a first pane thickness 220A, the second pane 130B includes a second pane thickness 220B, and the third pane 130C includes a third pane thickness 220C. The second pane thickness 220B can be less than the first pane thickness 220A or the third pane thickness 230C. According to the invention, the second pane thickness 220B is less than 2 millimeter, the first pane thickness 220A can be within a range of approximately 3 millimeters to 12 millimeters, and the third pane thickness 220C can be within a range of 2 millimeters to 12 millimeters. In another example, the second pane thickness 220B can be less than or equal to 1 millimeter, the first pane thickness 220A can be within a range of approximately 3 millimeters to 6 millimeters, and the third pane thickness 220C can be within a range of 3 millimeters to 10 millimeters.

In some examples, the first pane 130A and the third pane 130C include soda lime glass. However, soda lime glass is not commercially available in adequate size, quantity, and cost for a fenestration assembly (e.g., a 3 foot by 6 foot window, a 4 foot by 8 foot glass door, or the like) with thicknesses less than or equal to 1 millimeter. Accordingly, a fenestration assembly including a pane with soda lime glass that has a thickness less than or equal to 1 millimeter is not commercially adequate.

The second pane 130B includes a low CTE glazing material. The second pane 130B can have a low surface compression. The low CTE glazing material, or a glazing material having a low surface compression, can be manufactured with a thickness of less than or equal to 1 millimeter, and in commercially adequate size, quantity, and cost for a fenestration assembly (e.g., the fenestration assembly 100). Accordingly, the low CTE glazing provides a commercially adequate fenestration assembly (e.g., the fenestration assembly 100) in comparison to a fenestration assembly that does not include low CTE glazing or a glazing material with low surface compression.

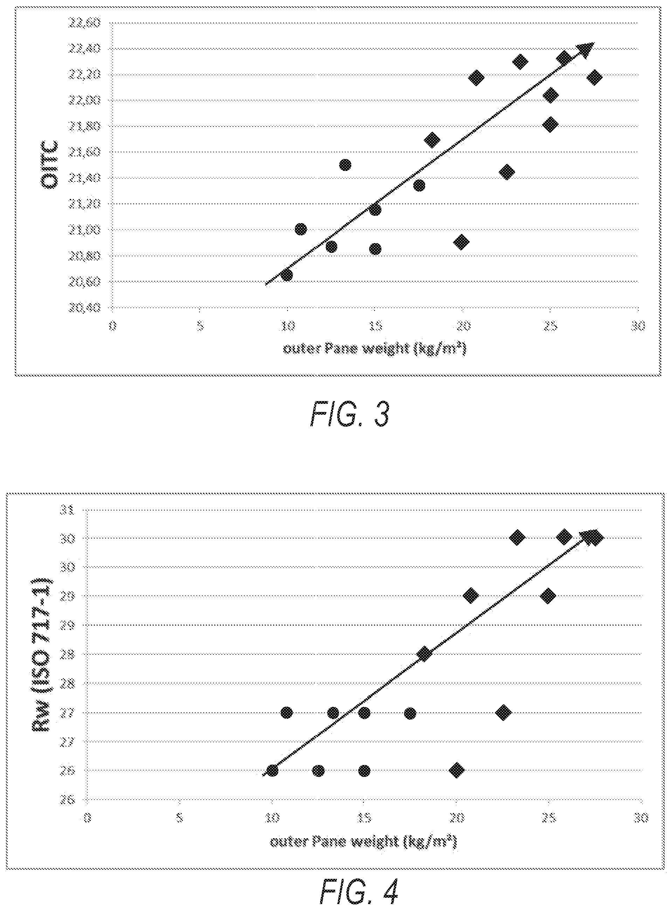

Figure 3 shows a graph of the acoustic performance of fenestration assemblies (e.g., the fenestration assembly 100, shown in Figure 1). The Y-axis in Figure 3 is the Outdoor/Indoor Transmission Class ("OTTC") rating of the fenestration assemblies, for instance as described in ASTM standard E1332. A greater OITC rating signifies improved sound attenuation of (e.g., reduced sound transmission through) the fenestration assemblies.

The X-axis in Figure 3 is the weight of an outer pane of the fenestration assemblies (e.g., the first pane 130B, or the outermost pane in the fenestration assembly 100 with respect to the interior of the structure). The area of the outer pane (e.g., height and width of the outer pane) is held constant, and the thickness of the outer pane is varied to correspondingly vary the weight of the outer pane. In an example, the outer pane can have a weight of about 21 kilograms per meter-squared, and a calculated OITC rating greater than about 22.15. In another example, the outer pane can have a weight of about 26 kilograms per meter-squared, and an one rating greater than about 22.35.

The circular data points in Figure 3 signify fenestration assemblies that only include soda lime glass, and accordingly do not include panes with a thickness less than or equal to 1 millimeter. The diamond-shaped data points signify fenestration assemblies that include panes with a thickness of less than or equal to 1 millimeter. As shown in Figure 3, as the thickness of the outer pane is increased, the sound attenuation corresponding increases. Further, the fenestration assemblies that include one or more panes with a thickness of less than or equal to 1 millimeter provide increased sound attenuation in comparison to fenestration assemblies that do not include one or more panes with a thickness of less than or equal to 1 millimeter (e.g., a fenestration assembly that only include soda lime glass).

Providing a fenestration assembly where a thickness of a pane (e.g., the second pane thickness 230B) is less than or equal to 1 millimeter (e.g., the fenestration assembly 100) facilitates shifting thicker panes within the fenestration assembly toward the exterior facing portion of the fenestration assembly. Accordingly, fenestration assemblies that include one or more panes with a thickness of less than or equal to 1 millimeter improve acoustic performance of the fenestration assembly (e.g., the fenestration assembly 100).

Figure 4 shows another graph of the acoustic performance of fenestration assemblies (e.g., the fenestration assembly 100, shown in Figure 1). The Y-axis in Figure 4 is the calculated weighted sound reduction index ($R_w$) of the fenestration assemblies. A greater $R_w$ signifies improved sound attenuation of (e.g., reduced sound transmission through) the fenestration assemblies, for instance according to ISO standard 717-1. The X-axis in Figure 4 is the weight of an outer pane of the fenestration assemblies (e.g., the first pane 130B, or the outermost pane in the fenestration assembly 100 with respect to the interior of the structure). The area of the outer pane (e.g., height and width of the outer pane) is held constant, and the thickness of the outer pane is varied to correspondingly vary the weight of the outer pane. In some examples, the total areal weight (e.g., the weight of the panes per unit area) of the panes 130 within the fenestration assembly (e.g., the fenestration assembly 100) is within a range of approximately 18 kilograms per meter-squared to 32 kilograms per meter-squared. In one example, the total areal weight is within a range of about 18 kilograms per meter-squared to 23 kilograms per meter-squared. In another example, the total areal weight is within a range of about 23 kilograms per meter-squared to 28 kilograms per meter-squared

The circular data points in Figure 4 signify fenestration assemblies that only include soda lime glass, and accordingly do not include panes with a thickness less than or equal to 1 millimeter. The diamond-shaped data points signify fenestration assemblies that include panes with a thickness of less than or equal to 1 millimeter. As shown in Figure 4, as the thickness of the outer pane is increased, the sound attenuation corresponding increases. Further, the fenestration assemblies that include one or more panes with a thickness of less than or equal to 1 millimeter provide increased sound attenuation in comparison to fenestration assemblies that do not include one or more panes with a thickness of less than or equal to 1 millimeter (e.g., a fenestration assembly that only include soda lime glass).

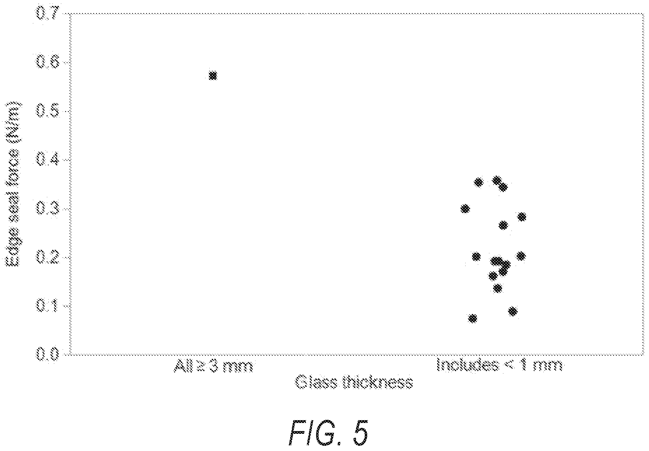

Figure 5 shows a graph of the force on the edge seal 210 of various fenestration assemblies (e.g., the fenestration assembly 100, shown in Figure 1). To calculate the edge seal force, "Glass in Building - Determination of the lateral load resistance of glass panes by calculation", draft European standard prEN 16612 (Aug. 2017), was utilized. European Standard prEN 16612 provides a method of determining the lateral load resistance of linearly supported glass elements, so it was utilized to quantify the edge seal force on the triple pane IGUs of the described fenestration assemblies to provide a basis of comparison.

As described herein, the fenestration assembly 100 can include a seal between the panes 130. The seal can entrap an insulating gas (e.g., inert gas), or maintain a partial vacuum, within a chamber gap 200. Temperature and pressure fluctuations in the environment will produce changes in pressure within the chamber gap. These in turn exert a mechanical stress on the edge seal, which can impact the ability of the primary seal to function. The lifetime of the fenestration assembly can be limited by the duration that the chamber gap 200 remains sealed, therefore low edge seal forces are desirable.

The Y-axis in Figure 5 is the calculated edge seal force (e.g., a force applied to the spacers 210 shown in Figure 2) resulting from a change in chamber gap pressure for different fenestration assemblies. The square-shaped data point signifies a representative fenestration assembly that includes conventional soda lime glass panes with a thickness greater than or equal to 3 millimeters, and accordingly does not include panes with a thickness less than or equal to 1 millimeter. The square-shaped data point provides an edge seal force of approximately between 0.55 N/m and 0.57 N/m. The circular data points signify fenestration assemblies that include one or more panes with a thickness of less than or equal to 1 millimeter (e.g., the fenestration assembly 100, shown in Figure 1). The circular data points provide edge seal forces of between 0.8 N/m to not greater than 0.4 N/m for the fenestration assemblies quantified in Figure 5.

As shown in Figure 5, the edge seal force is less with the fenestration assemblies that include one or more panes with a thickness of less than or equal to 1 millimeter. Accordingly, the lifetime is expected to be greater for fenestration assemblies that include one or more panes with a thickness of less than or equal to 1 millimeter. In contrast, the fenestration assembly that includes only thicker glass has greater edge seal forces, and correspondingly a lower estimated lifetime. Further, where the pane includes a low CTE glazing material the thermal expansion and contraction of the low CTE glazing material is reduced, and accordingly the stresses and strains applied to the seal around the low CTE glazing material are correspondingly reduced. Accordingly, the estimated lifetime of the fenestration assembly is improved.

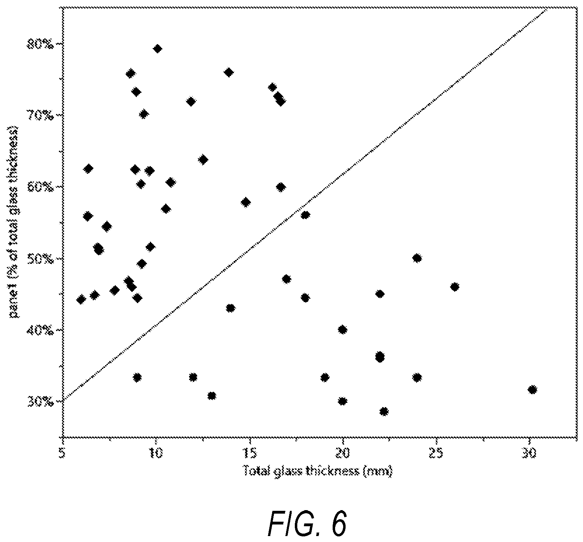

Figure 6 shows a graph of total glass thickness of the fenestration assembly (e.g. pane 1 + pane 2+ pane 3) vs. percent of total glass thickness of the first pane of fenestration assembly (e.g., the fenestration assembly 100, shown in Figure 1). The X-axis in Figure 6 is the total glass thickness of the fenestration assemblies. The total glass thickness ($t_{Total}$) is calculated by adding the thickness of the glass of the first pane ($t_1$, e.g., 220A in Figure 2), the thickness of the glass of the second pane ($t_2$, e.g., 220B in Figure 2) and the thickness of the glass of the third pane ($t_3$, e.g., either 220C for a single pane of glass, or 240A+240C for a laminate in Figure 2). The Y-axis in Figure 6 is the percent of total glass thickness that is in the first pane. The percent of total glass thickness that is in the first pane can be calculated by the following:

$$t_1/t_{Total} * 100$$

The circular data points in Figure 6 signify conventional triple pane fenestration assemblies that only include soda lime glass, and accordingly do not include panes with a thickness less than 2 millimeters. The diamond-shaped data points signify fenestration assemblies that include panes with a thickness of less than 2 millimeters (e.g. as second pane and/or third pane). As shown in Figure 6, the line that divides the present triple pane fenestration assemblies (signified by diamond-shaped data points) from the conventional triple pane fenestration assemblies (signified by circular data points) is:

$$\frac{t_1}{t_{Total}} \geq 0.2 + \frac{t_{Total}}{50\ mm}$$

The fenestration assemblies of the invention meet the requirement of the above formula.

The fenestration assemblies that include one or more panes (e.g. second pane or third panes) with a thickness of less than 2 millimeters (e.g., signified by diamond-shaped data points) provide increased sound attenuation in comparison to fenestration assemblies that do not include one or more panes with a thickness of less than 2 millimeters (e.g., a fenestration assembly that only include soda lime glass such as those signified by circular data points).

Providing a fenestration assembly where a thickness of a pane (e.g., the second pane thickness 220B in Figure 2) is less than 2 millimeters (e.g., the fenestration assembly 100) facilitates shifting thicker panes within the fenestration assembly toward the exterior facing portion of the fenestration assembly (e.g. outer pane, also referred to as first pane in the description). Accordingly, fenestration assemblies that include one or more panes with a thickness of less than 2 millimeters improve acoustic performance of the fenestration assembly (e.g., the fenestration assembly 100).

As shown in Figure 6, the diamond-shaped data points do not exceed about 16 mm in total glass thickness and the corresponding pane 1 percentage of total glass thickness is between 43% and 80% of the total glass thickness. With the first pane at 43-80% of the total glass thickness (e.g. at least 45% to not greater than 80%), the remaining second pane and third pane glass thickness together, are not greater than 20% to not greater than 15% of the total glass thickness. Comparing to the circular shaped data points, only a few are below 16 mm total glass thickness, and those few data points have a pane 1 percentage of total glass thickness of much lower than the circular data points, approximately 30% up to 45%. With the first pane at 30% to 45%, the remaining second pane and third pane glass thickness together, are not greater than 45% to not greater than 70%. For triple pane fenestration assemblies having a total glass thickness not exceeding 16 mm, the circular data points have second pane and third panes thicknesses much greater than the square-shaped data points.

In one or more embodiments of the present disclosure, the total glass thickness of the triple pane IGU comprises: a first pane of not greater than 90% of the total glass thickness; and the second pane and third pane glass thicknesses together of not greater than 10 % of the total glass thickness.

In one or more embodiments of the present disclosure, the total glass thickness of the triple pane IGU comprises: a first pane of not greater than 80% of the total glass thickness; and the second pane and third pane glass thicknesses together of not greater than 20 % of the total glass thickness.

In one or more embodiments of the present disclosure, the total glass thickness of the triple pane IGU comprises: a first pane of at least 43 % to not greater than 80% of the total glass thickness; a second pane having a thickness of not greater than 30%, and the remaining thickness corresponding to the third glass pane.

In one or more embodiments of the present disclosure, the following table provides various embodiments of the corresponding percentage thickness of the panes and compared to the total glass thickness of the triple pane IGU.

a first pane of at least 43 % to not greater than 80% of the total glass thickness; a second pane having a thickness of not greater than 30%, and the remaining thickness corresponding to the third glass pane.

Table 1 below shows a variety of embodiments depicting percentage thickness for each of the panes of a fenestration assembly (as compared to total glass thickness (pane 1+ pane 2 + pane 3), in accordance with the present disclosure:

| example number | first pane | second pane | third pane |
|---|---|---|---|
| 1 | 80 | 10 | 10 |
| 2 | 80 | 5 | 15 |
| 3 | 80 | 15 | 5 |
| 4 | 75 | 20 | 5 |
| 5 | 75 | 5 | 20 |
| 6 | 75 | 10 | 15 |
| 7 | 75 | 15 | 10 |
| 8 | 75 | 12.5 | 12.5 |
| 9 | 70 | 15 | 15 |
| 10 | 70 | 10 | 20 |
| 11 | 70 | 20 | 10 |
| 12 | 65 | 30 | 5 |
| 13 | 65 | 5 | 30 |
| 14 | 65 | 20 | 15 |
| 15 | 65 | 15 | 20 |
| 16 | 65 | 25 | 10 |
| 17 | 65 | 10 | 25 |
| 18 | 65 | 17.5 | 17.5 |
| 19 | 60 | 20 | 20 |
| 20 | 60 | 30 | 10 |
| 21 | 60 | 10 | 30 |
| 22 | 60 | 25 | 15 |
| 23 | 60 | 15 | 25 |
| 24 | 60 | 35 | 5 |
| 25 | 60 | 5 | 35 |
| 26 | 50 | 25 | 25 |
| 27 | 50 | 30 | 20 |
| 28 | 50 | 20 | 30 |
| 29 | 50 | 15 | 35 |
| 30 | 50 | 10 | 40 |
| 31 | 50 | 5 | 45 |
| 32 | 45 | 5 | 40 |
| 33 | 45 | 10 | 45 |
| 34 | 45 | 15 | 40 |
| 35 | 45 | 20 | 35 |
| 36 | 45 | 30 | 25 |
| 37 | 45 | 25 | 30 |

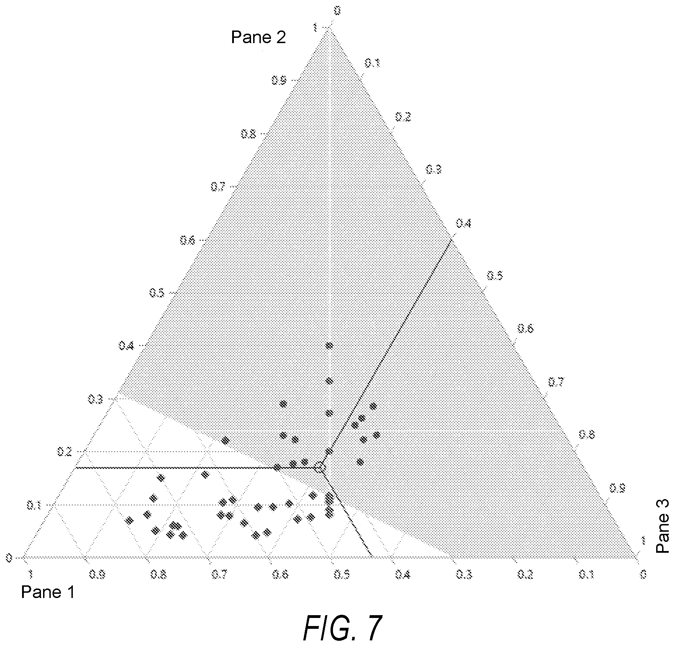

Figure 7 shows a ternary diagram of the glass percentage (by weight) of each of the three panes of fenestration assemblies (e.g., the fenestration assembly 100, shown in Figure 1). The weight percent is provided in fractional form (e.g. 0.1 corresponds to 10% of the total glass weight of the triple pane fenestration assembly). The X-axis (bottom axis) in Figure 7 is the percent of total glass weight that is in the first pane can be calculated by the following:

$$w_1/w_{Total}$$

where $w_{Total}$ is equal to the weight of glass in the first pane ($w_1$) plus the weight of glass in the second pane ($w_2$) plus the weight of glass in the third pane ($w_3$). While Figure 7 is detailed with respect to weight percentages, it is noted herein that the corresponding diagram would also be representative of the relationship of IGU components (e.g. panes) with respect to their representative thicknesses, as the thickness and weight are proportional to each other.

The Y-axis (right axis) in Figure 7 is the percent of total glass weight that is in the third pane can be calculated by the following:

$$w_3/w_{Total}$$

The Z-axis (left axis) in Figure 7 is the percent of total glass weight that is in the second pane can be calculated by the following:

$$w_2/w_{Total}$$

For example, the indicated point (open circle, where the three lines intersect) has 43% of the glass weight in the first pane (e.g., the outer pane 130A in Figure 2), 17% in the second pane (e.g., center pane 130B in Figure 2), and 40% in the third pane (e.g., inner pane 130C in Figure 2).

The circular data points in Figure 7 signify conventional triple pane fenestration assemblies that only include soda lime glass, and accordingly do not include panes with a thickness less than 2 millimeters. The diamond-shaped data points signify fenestration assemblies that include panes with a thickness of less than 2 millimeters.

As described above, the fenestration assembly 100 can include a seal between the panes 130. The seal can entrap an insulating gas (e.g., inert gas), or maintain a partial vacuum, within a chamber gap 200. Temperature and pressure fluctuations in the environment will produce changes in pressure within the chamber gap. These in turn exert a mechanical stress on the edge seal, which can impact the ability of the primary seal to function. The lifetime of the fenestration assembly can be limited by the duration that the chamber gap 200 remains sealed, therefore low edge seal forces are desirable.

The shaded region of Figure 7 shows where the calculated force on the fenestration assembly inert gas cavity edge seals caused by seasonal temperature cycling exceeds a cutoff value. The cutoff value is an edge seal force of greater than 1.2 N/m, as measured in accordance with prEN 16612. The edge seal force is less with the fenestration assemblies that include one or more panes with a thickness of less than or equal to 2 millimeter (e.g., shown by diamond-shaped data points). Accordingly, the lifetime is expected to be greater for fenestration assemblies that include one or more panes with a thickness of less than or equal to 2 millimeters (e.g., shown by diamond-shaped data points). In contrast, the fenestration assemblies that include only thicker glass (e.g., those shown by circular data points) have greater edge seal forces, and correspondingly a lower estimated lifetime. Further, where the pane includes a low CTE glazing material the thermal expansion and contraction of the low CTE glazing material is reduced, and accordingly the stresses and strains applied to the seal around the low CTE glazing material are correspondingly reduced. Accordingly, the estimated lifetime of the fenestration assembly is improved.

As depicted in Figure 7, the diamond-shaped data points depict a weight percentage of pane 1 in the range of approximately 43% (0.43) to not greater than 80% (0.80), the weight percentage of pane 2 in the range of approximately 4% to 18 %, and the weight percentage of pane 3 in the range of approximately 16% to 52%.

In some embodiments, the triple pane fenestration assembly comprises a first pane weight percentage of 45% to 80%, a second pane weight percentage of 3 to 20 wt %, and the third pane weight percentage of 15 to 45 wt. %, based on the total glass weight of the fenestration assembly.

In one or more embodiments of the present disclosure, the total glass weight of the triple pane IGU comprises: a first pane of not greater than 90% of the total glass weight; and the second pane and third pane glass weight together of not greater than 10 % of the total glass weight.

In one or more embodiments of the present disclosure, the total glass weight of the triple pane IGU comprises: a first pane of not greater than 80% of the total glass weight; and the second pane and third pane glass weight together of not greater than 20 % of the total glass weight.

In one or more embodiments of the present disclosure, the total glass weight of the triple pane IGU comprises: a first pane of at least 43 % to not greater than 80% of the total glass weight; a second pane having a weight of not greater than 30%, and the remaining weight corresponding to the third glass pane.

In one or more embodiments of the present disclosure, the following table provides various embodiments of the corresponding percentage weight of the panes and compared to the total glass weight of the triple pane IGU.

Table 2 below shows a variety of embodiments depicting percentage weight for each of the panes of a fenestration assembly (as compared to total glass weight (pane 1+ pane 2 + pane 3), in accordance with the present disclosure:

| example number | first pane (%) | second pane (%) | third pane (%) |
|---|---|---|---|
| 1 | 80 | 10 | 10 |
| 2 | 80 | 5 | 15 |
| 3 | 80 | 15 | 5 |
| 4 | 75 | 5 | 20 |
| 5 | 75 | 10 | 15 |
| 6 | 75 | 15 | 10 |
| 7 | 75 | 12.5 | 12.5 |
| 8 | 70 | 15 | 15 |
| 9 | 70 | 10 | 20 |
| 10 | 65 | 5 | 30 |
| 11 | 65 | 20 | 15 |
| 12 | 65 | 15 | 20 |
| 13 | 65 | 25 | 10 |
| 14 | 65 | 10 | 25 |
| 15 | 60 | 10 | 30 |
| 16 | 60 | 15 | *25* |
| 17 | 60 | 5 | 35 |
| 18 | 50 | 15 | 35 |
| 19 | 50 | 10 | 40 |
| 20 | 50 | 5 | 45 |
| 21 | 45 | 5 | 40 |
| 22 | 45 | 10 | 45 |
| 23 | 45 | 15 | 40 |

As shown in Figure 7, the diamond-shaped data points lie outside the shaded region, where the shaded region depicts an edge seal force of greater than 1.2 N/m. Thus, one or more embodiments of the present disclosure include an edge force seal not exceeding 1.2 N/m, when measured in accordance with prEN 16612.

In some embodiments, the triple pane fenestration assembly comprises an edge seal force in the range of at least 0.05N/m to not greater than 1.2 N/m, when measured in accordance with prEN 16612.

In some embodiments, the triple pane fenestration assembly comprises an edge seal force in the range of at least 0.1N/m to not greater than 1 N/m, when measured in accordance with prEN 16612.

In some embodiments, the triple pane fenestration assembly comprises an edge seal force in the range of at least 0.3N/m to not greater than 1 N/m, when measured in accordance with prEN 16612.

In some embodiments, the triple pane fenestration assembly comprises an edge seal force in the range of at least 0.3N/m to not greater than 0.8 N/m, when measured in accordance with prEN 16612.

In some embodiments, the triple pane fenestration assembly comprises an edge seal force in the range of at least 0.2N/m to not greater than 0.6 N/m, when measured in accordance with prEN 16612.

In some embodiments, the triple pane fenestration assembly comprises an edge seal force, when measured in accordance with prEN 16612, of: at least 0.05 N/m; at least 0.1 N/m; at least 0.2 N/m; at least 0.3 N/m; at least 0.4 N/m; at least 0.5 N/m; at least 0.6 N/m; at least 0.7 N/m; at least 0.8 N/m; at least 0.9 N/m; or at least 1 N/m.

In some embodiments, the triple pane fenestration assembly comprises an edge seal force, when measured in accordance with prEN 16612, of: not greater than 0.05 N/m; not greater than 0.1 N/m; not greater than 0.2 N/m; not greater than 0.3 N/m; not greater than 0.4 N/m; not greater than 0.5 N/m; not greater than 0.6 N/m; not greater than 0.7 N/m; not greater than 0.8 N/m; not greater than 0.9 N/m; or not greater than 1 N/m.

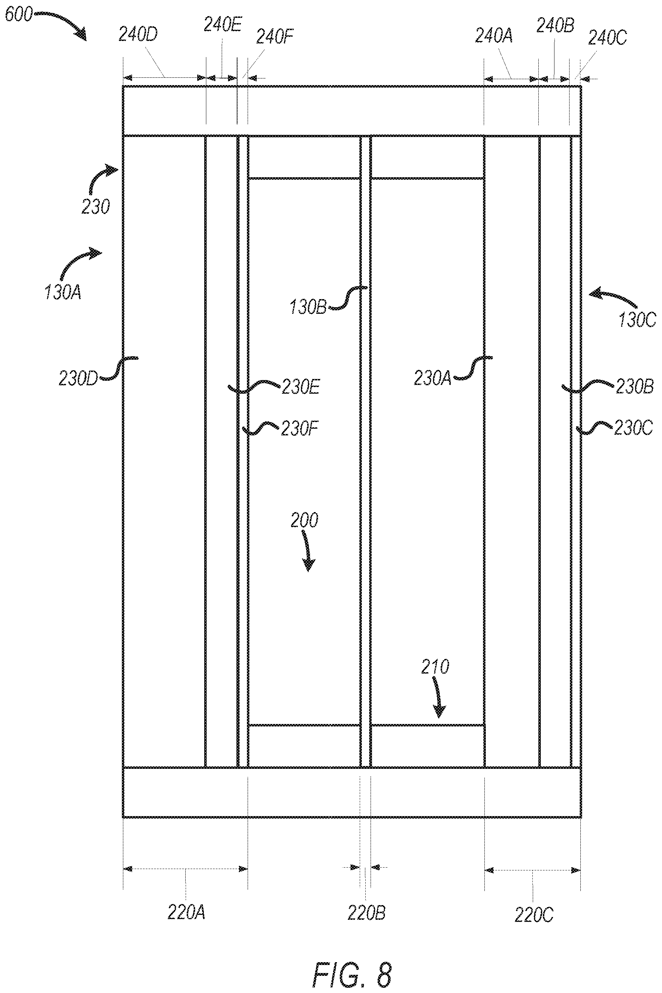

Figure 8 shows a cross-sectional view of a second fenestration assembly 600. The fenestration assembly 600 includes the first pane 130A, the second pane 130B, and the third pane 130C. The chamber gaps 200 are located between the panes 130, and the spacers 210 can be located within the chamber gaps 200.

The first pane 130A and the third pane 130C can include the plurality of layers 230. In an example, the third pane 130C can include the first glass layer 230A, the first intermediate layer 230B, and the first glazing layer 230C. The first pane 130A can include a second glass layer 230D, a second intermediate layer 230E, and a second glazing layer 230F. As shown in Figure 8, the first glass layer 230A and the second glass layer 230D can be oriented in the same direction within the third pane 130C and the first pane 130A, respectively (e.g., the first glass layer 230A and the second glass layer 230D are on the left side of third pane 130C and the first pane 130A). In an example, the first glass layer 230A and the second glass layer 230D can be oriented to face away from an interior of a structure, and the mass of glass is shifted toward away from the interior of the structure. Accordingly, the performance of the fenestration assembly 600 is thereby improved. Additionally, the first pane 130A can be an outer (e.g., exterior facing) pane 130, and the third pane can be an inner (e.g., interior facing) pane 130.

As shown in Figure 8, the first pane thickness 220A can be greater than the second pane thickness 220B, and the third pane thickness 220C. The first glass layer 230A has a first glass layer thickness 240A, the first intermediate layer 230B has a first intermediate layer thickness 240B, and the first glazing layer 230C has a first glazing layer thickness 240C. The second glass layer 230D has a second glass layer thickness 240D, the second intermediate layer 230E has a second intermediate layer thickness 240E, and the second glazing layer 230F has a second glazing layer thickness 240F.

The second glass layer thickness 240D can be greater than the first glass layer thickness 240A. For instance, the second glass layer thickness 240D can be within a range of approximately 3 millimeters to 6 millimeters (e.g., 3.2 millimeters), and the first glass layer thickness 240A can be within a range of 2 millimeters to less than 3 millimeters. Accordingly, the first pane thickness 220A can be greater than the third pane thickness 220C.

In another example, the first glass layer thickness 240A can be equal to the second glass layer thickness 240D. For instance, the second glass layer thickness 240D can be within a range of approximately 2 millimeters to 6 millimeters, and the first glass layer thickness 240D can be within a range of 2 millimeters to 6 millimeters. Accordingly, the first pane thickness 220A can be equal to the third pane thickness 220C.

The first glazing layer thickness 240C and the second glazing layer thickness 240F can be less than the first glass layer thickness 240A or the second glass layer thickness 240D. For instance, the first glazing layer thickness 240C and the second glazing layer thickness 240F can be less than or equal to 1 millimeter, and the first glass layer thickness 240A or the second glass layer thickness 240D can be within a range of approximately 2 millimeters to 6 millimeters. Accordingly, the first pane 130A or the third pane 130C can be asymmetric, and the asymmetry within the layers 230 can improve the impact resistance of the first pane 130A or the third pane 130C.

Additionally, the second pane thickness 220B can be less than or equal to 1 millimeter and is at least less than 2 millimeter. Accordingly, the second pane thickness 220B can be less than the first glass layer thickness 220A or the second glass layer thickness 240D. As discussed herein, when second pane thickness 220B is less than or equal to 1 millimeter or less than or equal to 2 millimeters, the performance of the fenestration assembly 600 is improved (e.g., by shifting the glass mass away from an interior of a structure). In an example, because the glass mass is shifted away from an interior of the structure, for instance by making the first glass layer thickness 240A or the second glass layer thickness 240D greater than the second pane thickness 220B, the first glass layer 230A or the second glass layer 230D absorbs sound energy generated from an exterior of the structure, and the acoustic performance of the fenestration assembly 600 is thereby improved.

In an example, the second glass layer thickness 240D can be greater than or equal to 4 millimeters, and the second glass layer 230D can have a surface compression of greater than or equal to 69 MPa. The first glass layer thickness 240A can be within a range of approximately 2 millimeters to 3 millimeters, and the first glass layer 230A can have a surface compression of less than or equal to 52 MPa (e.g., 24 MPa or less). The first glazing layer thickness 240C and the second glazing layer thickness 240F can be less than or equal to 1 millimeter and the first glazing layer 240C and the second glazing layer 240F can have a surface compression that is greater than or equal to 600 MPa. The second pane 130B can have a surface compression less than or equal to 24 MPa.

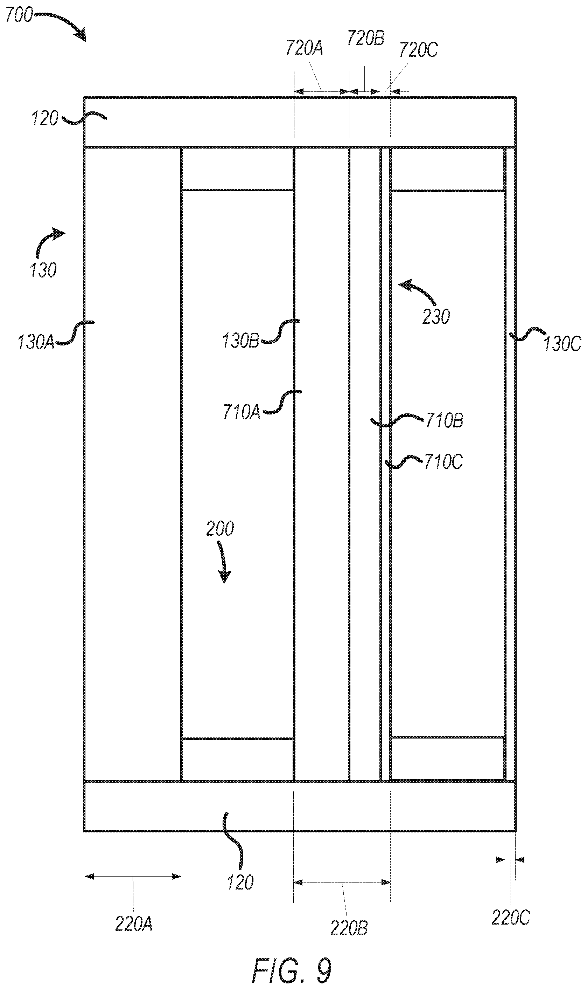

Figure 9 shows a cross-sectional view of a third fenestration assembly 700. As described herein, the second pane 130B can located between the first pane 130A and the third pane 130C (e.g., the second pane 130B can be a center pane 130). The first pane 130A and the third pane 130C can include a single piece of material (e.g., soda lime glass or a glazing material). The second pane 130B can include the plurality of layers 230C.

The first pane thickness 220A can be greater than or equal to the second pane thickness 220B. The third pane thickness 220C can be less than the first pane thickness 220A or the second pane thickness 220B. For instance, third pane 130C can include a low CTE or glazing material with a thickness of less than or equal to 1 millimeter. In some examples, the first pane 130A can include a unitary (e.g., monolithic) pane of soda lime glass, for instance within a range of approximately 3 millimeters to 8 millimeters. Additionally, the second pane thickness can be within a range of approximately 3 millimeters to 6 millimeters. Further, the third pane 130C can include a unitary piece of glazing material or soda lime glass.

In some examples, the second pane 130B can include the plurality of layers 230, for instance a first layer 710A, a second layer 710B, and the third layer 710C. The second layer 710B can include the first intermediate layer 230B (shown in Figures 2 and 6) or the second intermediate layer 230E (shown in Figure 8). The first layer 710A and the third layer 710C can include a glazing material, for instance the first glazing layer 230C shown in Figure 2 (e.g., a low CTE glazing material or a glazing material with a surface compression within a range of approximately 500 MPa to 700 MPa). A first layer thickness 720A of the first layer 710A can be less than or equal to 1 millimeter, and a third layer thickness 720C of the third layer 710C can be less than or equal to 1 millimeter. Accordingly, the second pane 130B can be symmetric. In another example, the first layer 710A includes the first glass layer 230A or the second glass layer 230D. Accordingly, the second pane 130B can be asymmetric because, in an example, the first glass layer 230A is not commercially adequate with a thickness of less than or equal to 1 millimeter.

Referring again to Figure 9, the third pane 130C can include a glazing material, and the glazing material can improve the performance of the fenestration assembly 700. For instance, the glazing material can have a scratch resistance that is greater than soda lime glass. For instance, the third pane 130C can have a Knoop scratch threshold greater than 2 Newtons. The Knoop scratch threshold can be determined by engaging an indenting member with the third pane 130C and gradually increasing the force applied to the indenting member while moving the indenting member across the surface of the third pane 130C. The third pane 130C can be observed to determine if a scratch is formed on a surface of the third pane 130C, and the force required to form the scratch can be determined based upon, for instance, the position where the scratch forms relative to a starting position of the indenting member.

In an example, the third pane 130C can have a Knoop scratch threshold within a range of approximately 2 Newtons to 12 Newtons (e.g., 2 Newtons to 6 Newtons, 4 Newtons to 5 Newtons, 4 Newtons to 6 Newtons, 8 Newtons to 12 Newtons, or the like). Soda lime glass can have a Knoop scratch threshold of less than 2 Newtons (e.g., 0.5 Newtons to 1.5 Newtons). In this example, third pane 130C can be oriented to face toward an interior of a structure. Accordingly, the third pane 130C with greater scratch resistance is oriented toward the interior of the structure and the performance of the fenestration assembly 700 is improved. In one example, the third pane 130C is cleaned and has improved resistance to scratches or abrasions as a result of the cleaning process (in comparison to soda lime glass).

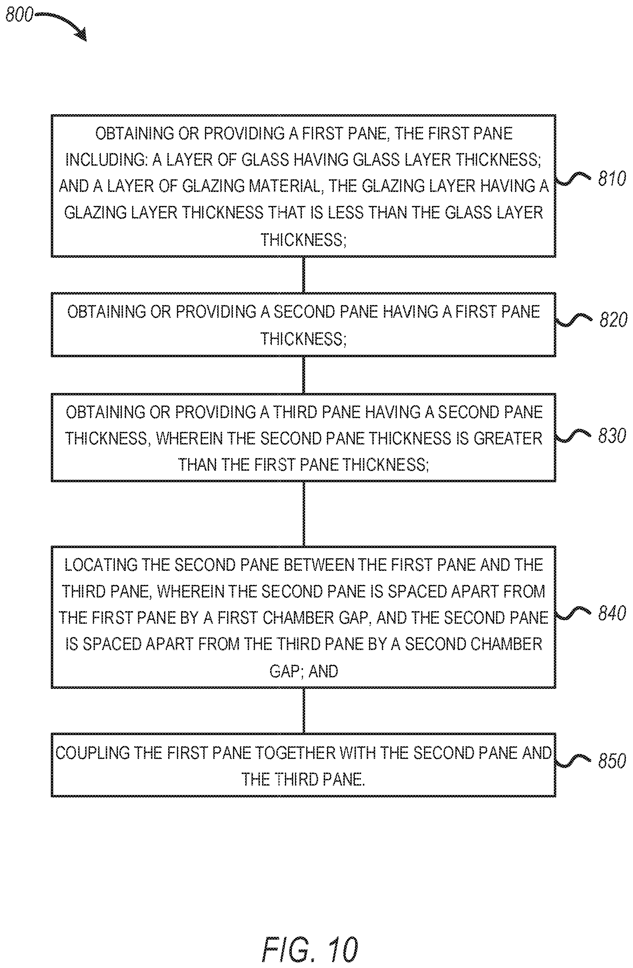

Figure 10 shows one example of a method 800 for manufacturing a fenestration assembly, including one or more of the fenestration assemblies described herein. In describing the method 800, reference is made to one or more components, features, functions and operations previously described herein. Where convenient, reference is made to the components, features, operations and the like with reference numerals. The reference numerals provided are exemplary and are not exclusive. For instance, components, features, functions, operations and the like described in the method 800 include, but are not limited to, the corresponding numbered elements provided herein and other corresponding elements described herein (both numbered and unnumbered) as well as their equivalents.

At 810, a first pane 130A can be obtained or provided (e.g., by a technician). The first pane 130C can include a glass layer 230 having a glass layer thickness 240A. The first pane 130C can include a glazing layer 230C having a glazing layer thickness 240C. The glazing layer thickness 240C can be less than the glass layer thickness 240A.

At 820, a second pane 130B having a first pane thickness (e.g., the second pane thickness 220B) is obtained or provided. At 830, a third pane 130C having a second pane thickness (e.g., the first pane thickness 220A or the third pane thickness 220C) can be obtained or provided. The first pane thickness can be less than the second pane thickness.

At 840, the second pane 130B can be located between the first pane 130A and the third pane 130C. The second pane 130B can be spaced apart from the first pane 130A by chamber gaps 200, for instance a first chamber gap 200A. The second pane 130B can be spaced apart from the third pane 130C by a second chamber gap 200B. At 850, the first pane can be coupled together with the second pane 130B and the third pane 130C. In an example, the first pane 130A, the second pane 130B, and the third pane 130C can be coupled together about a perimeter of the first pane 130A, the second pane 130B, and the third pane 130C. For instance, the first pane 130A, the second pane 130B, and the third pane 130C can be coupled with a sash 120.

In some embodiments, seal further comprises at least one spacer.

In some embodiments, the first glass layer thickness is greater than the second glass layer thickness.

In some embodiments, the second glass layer thickness is within a range of three millimeters to six millimeters.

In some embodiments, the second pane thickness is less than or equal to 1 millimeter.

In some embodiments, a weight percentage of the first pane as compared to the total weight of first pane, the second pane, and the third pane, is in the range of at least 43% to not greater than 80%.

In some embodiments, a weight percentage of the second pane as compared to the total weight of first pane, the second pane, and the third pane, is not greater than 30 %.

In some embodiments, a weight percentage of the third pane as compared to the total weight of first pane, the second pane, and the third pane, is in the range of at least 10% to not greater than 50%.

In some embodiments, an acoustic dampening of not greater than 27 Rw a first pane weight in the range of 10-17.5 kg/m$^2$, when measured in accordance with ISO 717-1.

The above description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided.

In the event of inconsistent usages between this document and any documents so incorporated by reference, the usage in this document controls.

In this document, the terms "a" or "an" are used, as is common in patent documents, to include one or more than one, independent of any other instances or usages of "at least one " or "one or more." In this document, the term "or'" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

The above description is intended to be illustrative, and not restrictive. The scope of the invention should be determined with reference to the appended claims.

## Claims

1. An isolating fenestration assembly, comprising:

   a first pane (130A) having a first glass thickness;
   a third pane (130C) having a third glass thickness, the third pane spaced apart from the first pane;
   a second pane (130B) having a second glass thickness located between the first pane and the third pane, wherein the second pane is spaced apart from the first pane and the third pane;
   a first chamber gap (200A) located between the first pane and the second pane; and
   a second chamber gap (200B) located between the second pane and the third pane;
   wherein the second pane (130B) has a glass thickness (220B) less than 2 mm;
   **characterized in that**
   the ratio of thickness of the first glass thickness to the combined glass thickness of all three panes is greater than the combined glass thickness of all three panes in millimeters divided by 50 + 20%,
   wherein the second pane has a coefficient of thermal expansion less than 7 x 10$^{-6}$/K, and
   wherein at least one of the first pane and the third pane includes two or more glass layers laminated using an intermediate layer that comprises a polymeric material, and
   wherein at least one of the first, the second and the third pane includes surface features or subsurface features formed as a frosted pane or a pane with an uneven surface that distorts light that passes through the pane.

2. The isolating fenestration assembly of claim 1, wherein each of the first pane and the third pane includes two or more glass layers laminated using the intermediate layer.

3. The isolating fenestration assembly of claims 1 or 2, wherein the third glass thickness is less than the first glass thickness.

4. The isolating fenestration assembly of any of claims 1 to 3, wherein at least one of the first, second, or third panes includes an alumina borosilicate glass layer.

5. The isolating fenestration assembly of any of claims 1 to 4, wherein at least one of the first, second, or third panes includes a chemically strengthened glass layer.

6. The isolating fenestration assembly of any of claims 1 to 5, wherein the panes have a weight percentage, as compared to the total weight percentage of glass, as follows:

the first pane having a weight percentage of at least 43 % to not greater than 80%;
the second pane having a weight percentage of not greater than 30%; and
the third pane having a weight percentage of at least 10 % to not greater than 50%.

## Patentansprüche

1. Isolierfensteranordnung, aufweisend:

eine erste Scheibe (130A) mit einer ersten Glasdicke;
eine dritte Scheibe (130C) mit einer dritten Glasdicke, wobei die dritte Scheibe von der ersten Scheibe beabstandet ist;
eine zweite Scheibe (130B) mit einer zweiten Glasdicke, die sich zwischen der ersten Scheibe und der dritten Scheibe befindet, wobei die zweite Scheibe von der ersten Scheibe und von der dritten Scheibe beabstandet ist;
einen ersten Kammerspalt (200A), der sich zwischen der ersten Scheibe und der zweiten Scheibe befindet; und
einen zweiten Kammerspalt (200B), der sich zwischen der zweiten Scheibe und der dritten Scheibe befindet;
wobei die zweite Scheibe (130B) eine Glasdicke (220B) von unter 2 mm hat;
**dadurch gekennzeichnet, dass**
das Verhältnis der Dicke der ersten Glasdicke zur kombinierten Glasdicke aller drei Scheiben größer ist als die kombinierte Glasdicke aller drei Scheiben in Millimetern, geteilt durch 50, + 20 %,
wobei die zweite Scheibe einen Wärmeausdehnungskoeffizienten von unter 7 x $10^{-6}$/K hat, und
wobei die erste Scheibe und/oder die dritte Scheibe zwei oder mehr Glasschichten aufweist, die unter Verwendung einer Zwischenschicht, die ein Polymermaterial aufweist, laminiert sind, und
wobei die erste und/oder zweite und/oder dritte Scheibe Oberflächenmerkmale oder unter der Oberfläche befindliche Merkmale aufweist, die als mattierte Scheibe oder als Scheibe mit einer unebenen Oberfläche ausgebildet sind, die Licht verzerrt, das durch die Scheibe gelangt.

2. Isolierfensteranordnung nach Anspruch 1, wobei die erste Scheibe und die dritte Scheibe jeweils zwei oder mehr Glasschichten aufweisen, die unter Verwendung der Zwischenschicht laminiert sind.

3. Isolierfensteranordnung nach Anspruch 1 oder 2, wobei die dritte Glasdicke kleiner als die erste Glasdicke ist.

4. Isolierfensteranordnung nach einem der Ansprüche 1 bis 3, wobei die erste und/oder zweite und/oder dritte Scheibe eine Aluminiumoxid-Borosilikat-Glasschicht aufweist.

5. Isolierfensteranordnung nach einem der Ansprüche 1 bis 4, wobei die erste und/oder zweite und/oder dritte Scheibe eine chemisch verstärkte Glasschicht aufweisen.

6. Isolierfensteranordnung nach einem der Ansprüche 1 bis 5, wobei die Scheiben im Vergleich mit dem Gesamtgewichtsprozentanteil des Glases folgende Gewichtsprozentanteile aufweisen:

die erste Scheibe hat einen Gewichtsprozentanteil von mindestens 43 % bis nicht größer als 80 %;
die zweite Scheibe hat einen Gewichtsprozentanteil von nicht größer als 30 %; und
die dritte Scheibe hat einen Gewichtsprozentanteil von mindestens 10 % bis nicht größer als 50 %.

## Revendications

1. Ensemble de vitrage isolant, comprenant :

une première vitre (130A) ayant une première épaisseur de verre ;
une troisième vitre (130C) ayant une troisième épaisseur de verre, la troisième vitre étant espacée de la première vitre ;

une deuxième vitre (130B) ayant une deuxième épaisseur de verre, située entre la première vitre et la troisième vitre, la deuxième vitre étant espacée de la première vitre et de la troisième vitre ;

un premier espace de chambre (200A) situé entre la première vitre et la deuxième vitre ; et

un deuxième espace de chambre (200B) situé entre la deuxième vitre et la troisième vitre ;

la deuxième vitre (130B) ayant une épaisseur de verre (220B) inférieure à 2 mm ;

**caractérisé en ce que**

le rapport de l'épaisseur entre la première épaisseur de verre et l'épaisseur de verre combinée des trois verres est supérieur à l'épaisseur de verre combinée des trois verres en millimètres, divisée par 50, + 20 %,

la deuxième vitre a un coefficient de dilatation thermique inférieur à $7 \times 10^{-6}$/K, et

la première vitre et/ou la troisième vitre comprend deux ou plusieurs couches de verre laminées à l'aide d'une couche intermédiaire comprenant un matériau polymère, et

sachant que la première et/ou la deuxième et/ou la troisième vitre présente des caractéristiques de surface ou des caractéristiques sous-jacentes à la surface qui sont formées comme une vitre dépolie ou comme une vitre avec une surface irrégulière qui déforme la lumière traversant la vitre.

2. L'ensemble de vitrage isolant selon la revendication 1, sachant que la première vitre et la troisième vitre comportent chacune deux ou plusieurs couches de verre qui sont laminées à l'aide de la couche intermédiaire.

3. L'ensemble de vitrage isolant selon la revendication 1 ou 2, sachant que la troisième épaisseur de verre est inférieure à la première épaisseur de verre.

4. L'ensemble de vitrage isolant selon l'une quelconque des revendications 1 à 3, sachant que la première et/ou la deuxième et/ou la troisième vitre comportent une couche de verre à base de borosilicate d'alumine.

5. L'ensemble de vitrage isolant selon l'une quelconque des revendications 1 à 4, sachant que la première et/ou la deuxième et/ou la troisième vitre comportent une couche de verre renforcé chimiquement.

6. L'ensemble de vitrage isolant selon l'une quelconque des revendications 1 à 5, sachant que les vitres présentent les pourcentages en poids suivants par rapport au pourcentage en poids total du verre :

la première vitre a un pourcentage en poids d'au moins 43 % et ne dépassant pas 80 % ;

la deuxième vitre a un pourcentage en poids ne dépassant pas 30 % ; et

la troisième vitre a un pourcentage en poids d'au moins 10 % et ne dépassant pas 50 %.

*FIG. 1*

FIG. 2

FIG. 3

FIG. 4

FIG. 5

FIG. 6

FIG. 7

*FIG. 8*

*FIG. 9*

800

```
┌─────────────────────────────────────────────────────────┐
│ OBTAINING OR PROVIDING A FIRST PANE, THE FIRST PANE       │
│ INCLUDING: A LAYER OF GLASS HAVING GLASS LAYER THICKNESS;  │
│ AND A LAYER OF GLAZING MATERIAL, THE GLAZING LAYER HAVING A │──◯ 810
│ GLAZING LAYER THICKNESS THAT IS LESS THAN THE GLASS LAYER  │
│ THICKNESS;                                                 │
└─────────────────────────────────────────────────────────┘

┌─────────────────────────────────────────────────────────┐
│ OBTAINING OR PROVIDING A SECOND PANE HAVING A FIRST PANE   │──◯ 820
│ THICKNESS;                                                 │
└─────────────────────────────────────────────────────────┘

┌─────────────────────────────────────────────────────────┐
│ OBTAINING OR PROVIDING A THIRD PANE HAVING A SECOND PANE   │
│ THICKNESS, WHEREIN THE SECOND PANE THICKNESS IS GREATER    │──◯ 830
│ THAN THE FIRST PANE THICKNESS;                             │
└─────────────────────────────────────────────────────────┘

┌─────────────────────────────────────────────────────────┐
│ LOCATING THE SECOND PANE BETWEEN THE FIRST PANE AND THE    │
│ THIRD PANE, WHEREIN THE SECOND PANE IS SPACED APART FROM   │
│ THE FIRST PANE BY A FIRST CHAMBER GAP, AND THE SECOND PANE │──◯ 840
│ IS SPACED APART FROM THE THIRD PANE BY A SECOND CHAMBER    │
│ GAP; AND                                                   │
└─────────────────────────────────────────────────────────┘

┌─────────────────────────────────────────────────────────┐
│ COUPLING THE FIRST PANE TOGETHER WITH THE SECOND PANE AND  │──◯ 850
│ THE THIRD PANE.                                            │
└─────────────────────────────────────────────────────────┘
```

FIG. 10

**EP 3 899 185 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62783787

- WO 2015200793 A1